# EUROPÄISCHE PATENTSCHRIFT

(11) **EP 3 120 240 B1**
(45) Veröffentlichungstag und Bekanntmachung des Hinweises auf die Patenterteilung: **15.01.2020**
(21) Anmeldenummer: 15741909.4
(22) Anmeldetag: 02.04.2015
(51) Int. Cl.: G06F 9/44, G06F 8/33, G06F 8/41

(54) **SYSTEM ZUR VERBESSERTEN PARALLELISIERUNG EINES PROGRAMMCODES**
SYSTEM FOR IMPROVED PARALLELIZATION OF PROGRAM CODE
SYSTÈME DE PARALLÉLISATION AMÉLIORÉE D'UN CODE DE PROGRAMME

(30) Priorität: 27.06.2014 DE 102014212437
(43) Veröffentlichungstag der Anmeldung: 25.01.2017
(73) Patentinhaber: Siemens Aktiengesellschaft, 80333 München (DE)
(72) Erfinder: MAUERER, Wolfgang, 93093 Donaustauf (DE)
(86) Internationale Anmeldenummer: PCT/EP2015/057313
(87) Internationale Veröffentlichungsnummer: WO 2015/197210

(56) Entgegenhaltungen:
- YAMAGUCHI FABIAN ET AL: "Modeling and Discovering Vulnerabilities with Code Property Graphs", 2014 IEEE SYMPOSIUM ON SECURITY AND PRIVACY, IEEE, 18. Mai 2014 (2014-05-18), Seiten 590-604, XP032686160, ISSN: 1081-6011, DOI: 10.1109/SP.2014.44 [gefunden am 2014-11-13]

## Beschreibung

Die Erfindung betrifft ein System, bei dem parallele Software voll- bzw. teilautomatisiert aus bestehender nicht-paralleler Software gewonnen wird.

Fabian Yamaguchi u. a. beschreiben in "2014 IEEE Symposium on Security and Privacy", Seite 590-604, ein Codeanalysesystem, das mit aus bestehender Software gewonnenen Codeeigenschaftsgraphen arbeitet. Parallele Software kann bislang nur in seltenen Fällen, bspw. im Falle von einfachen Sequenzen, vollautomatisch aus bestehender nicht-paralleler Software gewonnen werden. Komplexere Algorithmen hingegen können bislang nur durch manuelles Umschreiben bzw. durch eine zeitaufwendige und kostenintensive manuelle Konversion in eine parallele Form gebracht werden.

Die der Erfindung zugrunde liegende Aufgabe besteht nun darin, ein System zur verbesserten Parallelisierung von Programmcode anzugeben, bei dem die oben genannten Nachteile möglichst vermieden werden und eine weitergehende Automatisierung ermöglicht wird.

Diese Aufgabe wird durch die Merkmale des Patentanspruchs 1 oder des Patentanspruchs 6 erfindungsgemäß gelöst. Die weiteren Ansprüche betreffen bevorzugte Ausgestaltungen der Erfindung.

Die Erfindung betrifft im Wesentlichen ein System, bei dem eine zur direkten Umsetzung von Parallelisierungsmaßnahmen vorgenommene menschliche Annotation zum Training eines lernfähigen automatischen Klassifikationsverfahrens herangezogen wird, das dann auf automatisch zu analysierende Codeblöcke angewendet wird, wobei aus den automatisch analysierten Codeblöcken dann durch menschliche Überprüfung gewonnene weitere geeignete Muster wiederum zur kontinuierlichen Verbesserung des lernfähigen automatischen Klassifikationsverfahrens herangezogen werden.

Nachfolgend wird die Erfindung anhand von in der Zeichnung dargestellten Ausführungsbeispielen näher erläutert.

Dabei zeigt:
- Figur 1: eine erste Darstellung zur Erläuterung eines Ausführungsbeispiels der Erfindung und
- Figur 2: eine zweite Darstellung zur Erläuterung eines Teiles eines Ausführungsbeispiels.

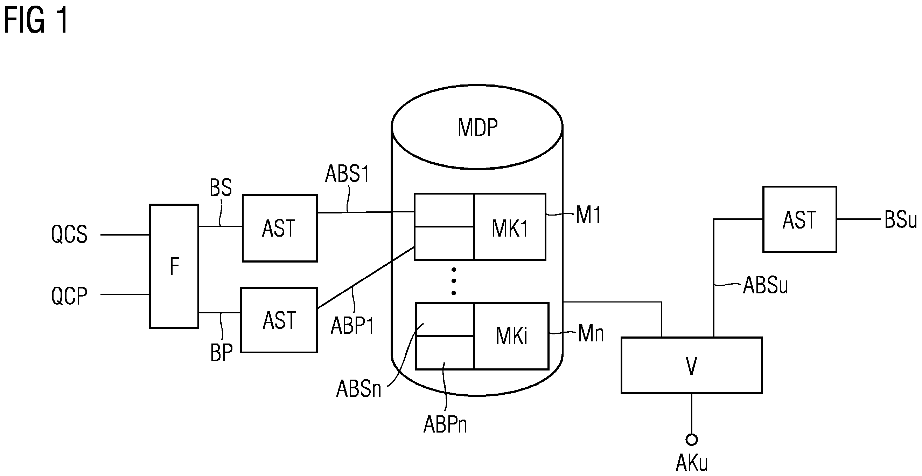

In Figur 1 ist eine Prinzipdarstellung gezeigt, bei der ausgehend von Quellcode, der in seriellen und parallelen Varianten **QCS** und **QCP** vorhanden ist, durch eine Überprüfungseinheit F Codeblöcke **BS** und **BP** identifiziert werden, die funktional gleiche Resultate liefern, aber aus den unterschiedlichen Varianten **QCS** und **QCP** stammen.

Ferner werden beide Varianten jeweils in eine sprachunabhängige, abstrakte syntaktische Form **AST** überführt und die abstrahierten funktional gleichen Blöcke, bspw. **ABS1** und **ABP1,** gemeinsam in einem Muster **M1** in einer semantischen Musterdatenbank **MDP** gespeichert, die insgesamt entsprechende Muster **M1..Mn** mit entsprechenden abstrahierten Codeblockpaaren **ABS1, AbP1** ... **ABSn, ABPn** aufweist.

Durch jeweilige manuelle Klassifizierung, d. h. expertenbasierte Evaluierung und Einordnung, werden dann die n Muster **M1..Mn** i verwandten Kategorien **MK1..MKi,** wie beispielsweise **"Schleifen umschreiben", "Datenstrukturen verändern"** und **"Strukturen aufdoppeln",** zugeordnet, um Parallelisierungsschemata zu erhalten.

Anschließend werden übliche Verfahren des maschinellen Lernens, wie beispielsweise neuronale Netze und Random Forests, angewendet, um die Abbildung in die von Experten gewählten Kategorien automatisiert zugänglich zu machen.

Ist eines oder mehrere Klassifikationsverfahren mit einer hinreichend großen Datenmenge trainiert, können neue, unbekannte Codeblöcke oder Codestücke **BSu** in die beschriebene abstrakte syntaktische Form **AST** überführt werden, um durch automatische Klassifikation einer Kategorie **AKu** zugeordnet zu werden.

Die Kategorie **AKu** kann optional einem Endbenutzer zur Verfügung gestellt werden, der daraufhin die am besten passenden Muster zur Parallelisierung auswählt.

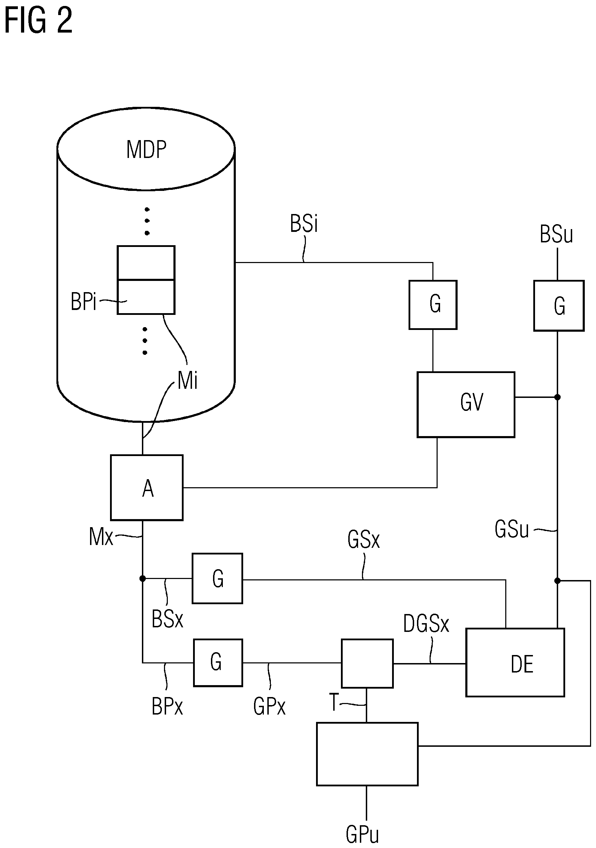

Es wird ein zusätzlicher in Figur 2 dargestellter Bestandteil des erfindungsgemäßen Systems verwendet, um nicht nur die jeweilige Kategorie **AKu** des jeweils untersuchten Codestücks zu bestimmen, sondern um einen konkreten Vorschlag zur Parallelisierung zu unterbreiten. Durch Techniken des Graphenvergleichs **GV** wird dasjenige Muster **Mx** mit seinem seriellen Code **BSx** ausgewählt **A,** dass sich im Sinne einer Graphdistanz am nächsten zu dem zu parallelisierenden Code **BSu** befindet. Anschließend werden die strukturellen Elemente beider Graphen in Deckung **DE** gebracht, eine Graphtransformation **T** für den Mustergraphen **DGSx** und dessen parallele Version **GPx** erstellt, und die resultierende Graphtransformation **T** auf den untersuchten Graphen **GSu** angewandt und dadurch eine passende parallele Version **GPu** erzeugt.

Alternativ wendet ein anderer Betriebsmodus die gleiche Ähnlichkeitssuche des oben beschriebenen zweiten Bestandteils des erfindungsgemäßen Systems an, allerdings nicht nur auf eine bestimmte Codestelle, sondern auf eine größere Menge Quelltext. Ferner wird hierbei die Ähnlichkeitssuche nicht als Ausgangspunkt für eine Graphtransformation verwendet, sondern um Stellen maximaler Ähnlichkeit zu bestehenden Mustern zu identifizieren und dadurch die am leichtesten zu parallelisierenden Anteile eines Codes kenntlich zu machen.

## Patentansprüche

1. System zur verbesserten Parallelisierung von Programmcode,
- bei dem ausgehend von Quellcode, der sowohl in einer seriellen (QCS) als auch in einer parallelen Variante (QCP) vorhanden ist, Codeblöcke (BS, BP) identifiziert werden, die funktional gleiche Resultate liefern, aber jeweils aus den beiden unterschiedlichen Varianten (QCS, QCP) stammen,
- bei dem beide Varianten jeweils in eine sprachunabhängige, abstrakte syntaktische Form (AST) überführt und die abstrahierten funktional gleichen Blöcke (ABS1, ABP1) gemeinsam in einem jeweiligen Muster (M1) in einer semantischen Musterdatenbank (MDP) gespeichert werden,
- bei dem für ein jeweiliges Muster (M1) eine manuelle Klassifizierung nach von Experten gewählten Kategorien (MK1..MKi) oder eine automatische Klassifizierung auf Basis einer durch maschinelles Lernen ermittelten Abbildung in diese von Experten gewählten Kategorien (MK1..MKi) erfolgt,
- bei dem anschließend ein jeweiliger neuer zu untersuchender Codeblock (BSu) ebenfalls in die abstrakte syntaktische Form (AST, ABSu) überführt wird und mit den abstrahierten seriellen Datenblöcken (ABS1..ABSn) aller Muster (M1..Mn) der semantischen Musterdatenbank (MDP) verglichen wird und auf diese Weise automatisch eine am besten zum neuen Codeblock (BSu) passende Kategorie (AKu) aus den von Experten gewählten Kategorien (MK1..MKi) ausgewählt wird,
- bei dem durch Graphenvergleich (GV) ein am besten passendes Muster (Mx) derart ausgewählt wird, dass sich der serielle Code (BSx) des Musters (Mx) im Sinne einer Graphdistanz am nächsten zu dem zu parallelisierenden Code (BSu) befindet,
- bei dem anschließend die strukturellen Elemente beider Graphen in Deckung (DE) gebracht und eine Graphtransformation (T) für den Graphen (DGSx) des am besten passenden Musters (Mx) und dessen parallele Version (GPx) erstellt wird und
- bei dem die resultierende Graphtransformation (T) auf den untersuchten Graphen (GSu) angewandt und dadurch eine passende parallele Version (GPu) erzeugt wird.

2. System nach Anspruch 1,
bei dem die abstrakte syntaktische Form als AST ausgebildet ist.

3. System nach Anspruch 1 oder 2,
bei dem die von Experten gewählten Kategorien (MK1..MKi) die Kategorien "Schleifen umschreiben", "Datenstrukturen verändern" und "Strukturen aufdoppeln" enthalten.

4. System nach einem der vorhergehenden Ansprüche,
bei dem die Abbildung durch maschinelles Lernen mit Hilfe eines neuronalen Netzes oder eines Random Forests ermittelt wird.

## Claims

1. System for improved parallelization of program code,
- in which, starting from source code which is present both in a serial variant (QCS) and in a parallel variant (QCP), code blocks (BS, BP) which provide functionally identical results but each come from the two different variants (QCS, QCP) are identified,
- in which both variants are each transferred to a language-independent, abstract syntactic form (AST) and the abstracted functionally identical blocks (ABS1, ABP1) are stored together in a respective pattern (M1) in a semantic pattern database (MDP),
- in which a manual classification according to categories (MK1..MKi) selected by experts or an automatic classification based on mapping to these categories (MK1..MKi) selected by experts, as determined by means of machine learning, is carried out for a respective pattern (M1),
- in which a respective new code block (BSu) to be investigated is then likewise transferred to the abstract syntactic form (AST, ABSu) and is compared with the abstracted serial data blocks (ABS1..ABSn) of all patterns (M1..Mn) in the semantic pattern database (MDP), and a category (AKu) best matching the new code block (BSu) is automatically selected in this manner from the categories (MK1..MKi) selected by experts,
- in which graph comparison (GV) is used to select a best matching pattern (Mx) in such a manner that the serial code (BSx) of the pattern (Mx) is closest to the code (BSu) to be parallelized in the sense of a graph distance,
- in which the structural elements of both graphs are then aligned (DE), and a graph transformation (T) is created for the graph (DGSx) of the best matching pattern (Mx) and its parallel version (GPx), and
- in which the resulting graph transformation (T) is applied to the graph (GSu) being investigated, and a matching parallel version (GPu) is generated thereby.

2. System according to Claim 1,
in which the abstract syntactic form is configured as AST.

3. System according to Claim 1 or 2,
in which the categories (MK1..MKi) selected by experts contain the categories "rewrite loops", "change data structures" and "double structures".

4. System according to one of the preceding claims,
in which the mapping is determined by means of machine learning with the aid of a neural network or a random forest.

## Revendications

1. Système de parallélisation améliorée d'un code de programme, dans lequel :
- sont identifiés, partant d'un code source qui existe non seulement dans une variante sérielle (QCS), mais aussi dans une variante parallèle, des blocs de code (BS, BP) qui fournissent des résultats fonctionnellement identiques, mais qui proviennent respectivement des deux variantes différentes (QCS, QCP),
- les deux variantes sont respectivement transférées dans une forme syntaxique abstraite indépendante du langage (AST) et les blocs fonctionnellement identiques ayant fait l'objet d'une abstraction (ABS1, ABP1) sont sauvegardés ensemble dans un modèle respectif (M1) dans une base de données de modèles sémantique (MDP),
- se fait, pour un modèle respectif (M1), un classement manuel selon des catégories (MK1 ... MKi) choisies par des experts ou un classement automatique sur la base d'une représentation, déterminée par apprentissage automatique, dans ces catégories choisies par des experts (MK1 ... MKi),
- un nouveau bloc de code (BSu) respectif à analyser est ensuite également transféré dans la forme syntaxique abstraite (AST, ABSu) et est comparé avec les blocs de données sériels ayant fait l'objet d'une abstraction (ABS1 ... ABSn) de tous les modèles (M1 ... Mn) de la base de données de modèles sémantiques (MDP) et une catégorie (AKu) convenant le mieux pour le nouveau bloc de code (BSu) est ainsi sélectionnée automatiquement parmi les catégories (MK1 ... MKi) choisies par des experts,
- un modèle (Mx) convenant le mieux est choisi de manière telle, par comparaison de graphes (GV), que le code sériel (BSx) du modèle (Mx) se trouve, au sens d'une distance de graphe, le plus près du code (BSu) à paralléliser,
- les éléments structurels des deux graphes sont ensuite mis en coïncidence (DE) et une transformation de graphe (T) est établie pour le graphe (DGSx) du modèle (Mx) convenant le mieux et sa version parallèle (GPx) et
- la transformation de graphe résultante (T) est appliquée au graphe examiné (GSu) et une version parallèle qui convient (GPu) est ainsi créée.

2. Système selon la revendication 1, dans lequel la forme syntaxique abstraite est réalisée en tant qu'AST.

3. Système selon la revendication 1 ou 2, dans lequel les catégories (MK1 ... MKi) choisies par des experts contiennent les catégories « réécrire les boucles », « modifier les structures » et « doubler les structures ».

4. Système selon l'une des revendications précédentes, dans lequel la représentation est déterminée par apprentissage automatique à l'aide d'un réseau neuronal ou d'une Random Forest.
